# FASCICULE DE BREVET EUROPEEN

(11) **EP 2 988 837 B1**
(45) Date de publication et mention de la délivrance du brevet: **08.08.2018**
(21) Numéro de dépôt: 14729941.6
(22) Date de dépôt: 25.04.2014
(51) Int. Cl.: A63B 69/00, A63B 7/00, G09B 19/00

(54) **DISPOSITIF D'ENTRAÎNEMENT POUR SPORT DE GLISSE**
TRAININGSVORRICHTUNG FÜR EINEN BRETTSPORT
TRAINING DEVICE FOR A BOARDSPORT

(30) Priorité: 25.04.2013 WO PCT/FR2013/000114
(43) Date de publication de la demande: 02.03.2016
(73) Titulaire: Claustre, Fanny, Port Vila (FR); David, Thomas, Port Vila (FR)
(72) Inventeur: Claustre, Fanny, Port Vila (FR); David, Thomas, Port Vila (FR)
(74) Mandataire: Delaveau, Sophie
(86) Numéro de dépôt international: PCT/FR2014/000090
(87) Numéro de publication internationale: WO 2014/174164

(56) Documents cités:
- WO-A1-2007/070915
- US-A- 2 539 869
- US-A- 5 163 828
- US-A- 5 662 555
- US-A1- 2011 263 344

## Description

L'invention concerne principalement un dispositif d'entraînement pour sport de glisse.

L'invention se situe dans le domaine des sports de glisse impliquant l'utilisation d'une planche sur laquelle le sportif est en équilibre. On pourra citer à titre d'exemple non limitatif comme sport de glisse visé par l'invention : le surf, le surf des neiges (snowboard), le wakeboard, le kiteboard ou encore le Stand Up Paddleboarding.

Ces sports de glisse nécessitent l'acquisition d'une gestuelle particulière sur la planche, et également de l'équilibre. Le document US-A-5662555 décrit un système et une méthode d'exercices aériens et le document US-A-2539869 décrit un appareil de divertissement ayant une balançoire. Or cette acquisition est d'autant plus délicate du fait des conditions environnementales qui viennent s'ajouter à la gestuelle proprement dite qu'il est nécessaire d'acquérir.

Dans ce contexte, la présente invention vise un dispositif selon la revendication 1 permettant d'assurer un entraînement de l'équilibre et musculaire, mais également un entraînement à la technique de gestes essentiels à la bonne assimilation et à la bonne pratique d'un sport de glisse impliquant l'utilisation d'une planche sur laquelle le sportif est en équilibre.

A cet effet, le dispositif d'entraînement pour un sport de glisse impliquant l'utilisation d'une planche est essentiellement caractérisé en ce qu'il comporte au moins une première et une seconde lignes principales de soutien de la planche s'étendant depuis au moins un point d'attache supérieur situé au-dessus et à distance de la planche jusqu'à respectivement un premier et un second éléments de soutien de la planche s'étendant chacun transversalement sous la planche et comportant chacun une partie d'appui sur laquelle repose la face inférieure de la dite planche.

Le dispositif de l'invention peut également comporter les caractéristiques optionnelles suivantes considérées isolément ou selon toutes les combinaisons techniques possibles :
- chacune des première et seconde lignes principales comporte une première et une seconde lignes secondaires, les extrémités inférieures des deux lignes secondaire de la première ligne principale étant solidarisées aux extrémités transversales du premier élément de soutien, et les extrémités inférieures des deux lignes secondaires de la seconde ligne principale étant solidarisées aux extrémités transversales du second élément de soutien, et les premier et second éléments de soutien sont respectivement disposés au niveau de la partie avant et de la partie arrière de la planche.
- une première et une seconde lignes inférieures de soutien s'étendent chacune longitudinalement sous la planche depuis l'extrémité transversale d'un élément de soutien jusqu'à l'extrémité transversale située du même côté de la planche de l'élément de soutien opposé.
- le dispositif comporte un premier et un second élément de maintien de la planche réalisé en un matériau élastique et s'étendant transversalement à proximité de la face supérieure de la dite planche entre les extrémités transversales respectivement des premier et second éléments de soutien.
- une sangle de serrage s'étend transversalement entre la première et la seconde ligne secondaire d'une ligne principale concernée en étant montée en coulissement sur ces dites lignes secondaires.
- chacune des première et seconde ligne principale s'étend au niveau de son extrémité supérieure depuis respectivement soit deux points d'attaches distincts coïncidant chacun avec l'extrémité supérieure de la première ou seconde ligne secondaire à considérer, soit un point d'attache unique formant jonction des extrémités supérieures de la première et seconde ligne secondaire à considérer.
- les première et seconde lignes de soutien se rejoignent dans leur partie supérieure jusqu'à un point d'attache supérieur unique, et le dispositif comporte une troisième ligne principale s'étendant depuis un point d'attache supérieur situé à distance longitudinale du point d'attache supérieur des première et seconde lignes principales de soutien, jusqu'aux première et seconde lignes secondaires de la ligne principale la plus proche.
- le dispositif comporte un portique comprenant au moins deux montants supérieurs parallèles longitudinaux reliés à des montants inférieurs en appui sur le sol, desquels montants supérieurs parallèles longitudinaux s'étendent les première et seconde lignes principales jusqu'au premier et un second élément de soutien situés à distance du sol.
- le ou les points d'attache des première et seconde lignes principales sont situés sur l'un ou l'autre des montants supérieurs parallèles longitudinaux.
- le dispositif comporte une première attache amovible montée en série sur une ligne principale et une seconde attache amovible montée à proximité de la ligne principale opposée en série sur une ligne de sécurité qui s'étend entre les deux lignes principale en supportant une ligne de barre montée en coulissement sur la ligne de sécurité et comportant à son extrémité inférieure une barre en regard de la planche destinée à être saisie par l'utilisateur du dispositif, les première et seconde liaisons amovibles permettant, par leur décrochage respectif, de monter une troisième ligne principale apte à s'étendre depuis un point d'attache supérieur jusqu'aux première et seconde lignes secondaires d'une ligne principale dont l'extrémité supérieure restante est solidarisée à l'une des liaisons amovibles restante.
- la planche est une planche de surf.

Enfin, l'invention porte sur une application selon la revendication 9 du dispositif tel que précédemment énoncé pour la préparation physique et gestuelle d'un sport de glisse.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en perspective d'un exemple du dispositif selon une première variante,
- la figure 2 est une vue agrandie de la partie cerclée II des figures 1 et 4 prise selon l'angle de perspective de la flèche désignant la partie cerclée II,
- la figure 3 est une vue agrandie de la partie cerclée III des figures 1 et 4 prise selon l'angle de perspective de la flèche désignant la partie cerclée III,
- la figure 4 est une représentation schématique en perspective d'une exemple du dispositif selon une seconde variante,
- la figure 5 est une représentation schématique en perspective du dispositif de l'invention selon une troisième variante et dans une première configuration,
- la figure 6 est une représentation schématique en perspective d'un exemple du dispositif selon la troisième variante et dans une deuxième configuration,
- la figure 7 est une représentation schématique en perspective d'un exemple du dispositif selon la troisième variante et dans une troisième configuration, et - la figure 8 est une représentation schématique en perspective d'un exemple du dispositif selon la troisième variante et dans une quatrième configuration.

Le dispositif d'entraînement de l'invention consiste dans son principe général à suspendre une planche de glisse au dessus du sol afin de bénéficier des effets de la suspension pour assurer un entraînement de l'équilibre et musculaire, mais également un entraînement à la technique de gestes essentiels à la bonne assimilation et à la bonne pratique d'une planche de glisse.

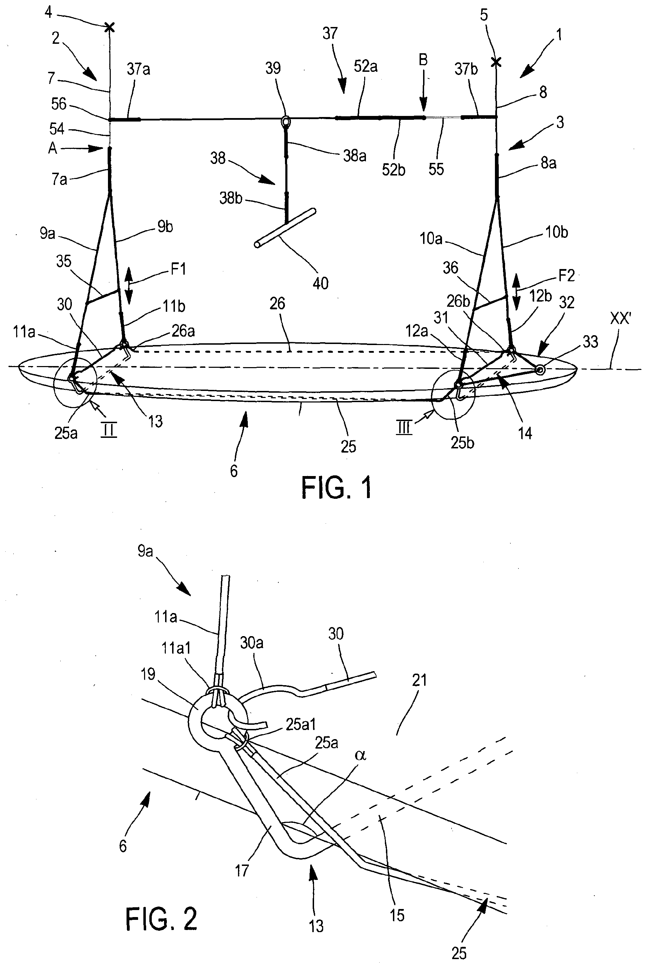

En référence à la figure 1 qui représente le premier mode de réalisation, le dispositif 1 comprend une première ligne principale de soutien 2 et une seconde ligne principale de soutien 3 s'étendant sensiblement parallèlement et verticalement depuis un point d'attache respectif supérieur 4, 5, par exemple au plafond ou sur tout système apte à supporter le poids combiné de la planche et de son utilisateur, jusqu'à la planche 6 qui s'étend selon un axe principal longitudinal XX'.

Chacune des première 2 et seconde 3 ligne principale se dédouble à mi-hauteur pour former une partie supérieure simple 7,8 et une partie dédoublée constituée respectivement d'une première 9a,10a et d'une seconde 9b,10b lignes secondaires.

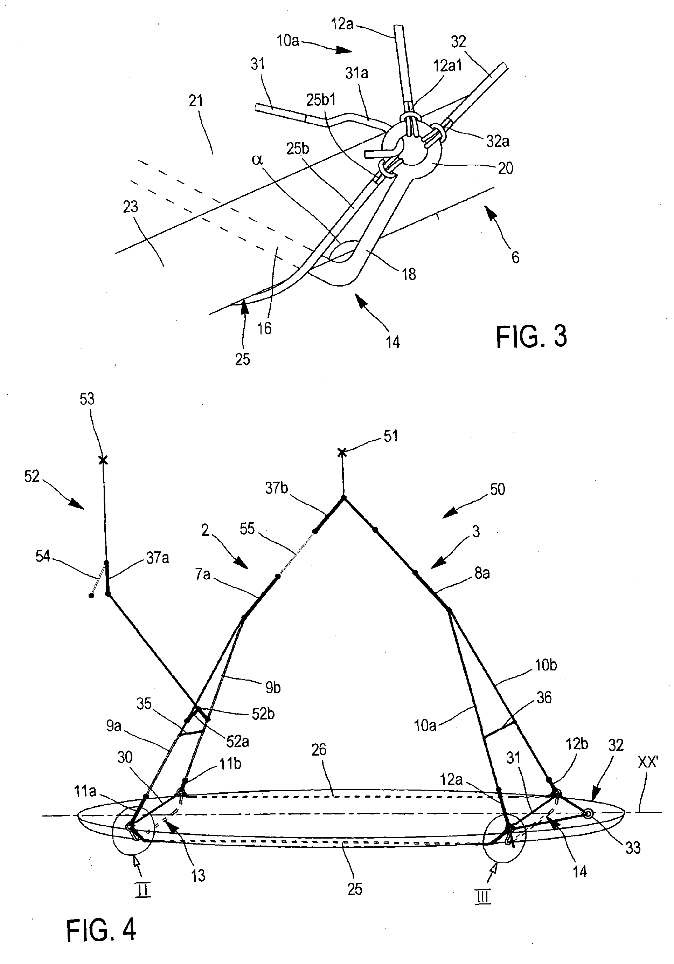

Les extrémités inférieures des première 9a,10a et seconde 9b,10b lignes secondaires comportent chacune un élément de serrage 11a,11b ; 12a,12b qui est fait d'une corde dont les extrémités opposées comportent un noeud dit en tête d'alouette 11a1,11a2 (figures 2 et 3). Comme il sera vu plus loin, ces éléments de serrage permettent notamment la mise en tension du dispositif.

En référence aux figures 2 et 3, les extrémités inférieures des première 9a, 10a et seconde 9b,10b lignes secondaires sont solidarisées, via les noeuds en tête d'alouette 11a1,12a1 des éléments d'attaches concernés 11a,11b ;12a,12b, à respectivement un premier 13 et un second 14 élément de maintien sur chacun desquels repose la face inférieure de la planche 6. La présence des première 9a,10a et seconde 9b,10b lignes secondaires solidarisées aux premier 13 et second 14 élément de maintien permet notamment d'assurer la stabilité latérale de la planche 6.

Les premier 13 et second 14 éléments de maintien sont respectivement disposés au niveau de la partie avant et de la partie arrière de la planche 6, leur espacement longitudinal étant tel que la planche 6 présente une stabilité longitudinale.

Chaque élément de maintien 13,14 présente une partie d'appui 15,16 située transversalement sous la planche 6 et sur laquelle repose la face inférieure de la planche 6. Cette partie d'appui 15,16 est rigide et comporte un revêtement, par exemple en néoprène ou en gomme, permettant l'immobilisation de la planche 6 en appui sur ces parties d'appui 15,16.

Les extrémités transversales 17,18 des éléments d'appui 13,14 sont constituées d'une section d'extrémité 17,18 visibles sur les figures 2 et 3 qui s'étend depuis la partie d'appui 15,16 de l'élément d'appui correspondant 13,14 jusqu'à un anneau de fixation 19,20 affleurant la face supérieure 21 de la planche 6. On notera que chaque élément d'appui 13,14 comporte deux sections d'extrémités opposées, seule une section d'extrémité étant visible pour des raisons de clarté sur les figures 2 et 3.

Par ailleurs, les sections d'extrémité 17,18 présentent avec la partie d'appui correspondante 15,16 un angle α supérieur à 90° afin d'épouser le profil incliné de la tranche 23 de la planche 6.

Comme visible sur les figures 2 et 3, les éléments d'attaches 11a,12a des lignes secondaires 9a,10a sont directement fixés sur l'anneau de fixation 19,20 de l'élément d'appui correspondant 13,14.

En référence à la figure 1, le dispositif comporte des première 25 et seconde 26 lignes inférieures de soutien qui s'étendent chacune longitudinalement sous la planche 6 depuis une extrémité transversale 17,18 d'un élément d'appui 13,14 jusqu'à l'extrémité transversale 17,18 de l'élément d'appui opposé 14,13 située du même coté de la planche 6. Plus précisément et comme illustré sur les figures 2 et 3, les extrémités de chacune des première 25 et seconde 26 lignes inférieures de soutien sont fixées aux anneaux de fixation 19,20 des sections d'extrémité 17,18 des éléments d'appui 13,14 correspondants.

A cet effet, les extrémités des première 25 et seconde 26 lignes inférieures sont également constituées d'un élément de serrage 25a,25b ; 26a,26b qui est fait d'une corde dont les extrémités opposées comportent un noeud dit en tête d'alouette 25a1,25b1 (figures 2 et 3), ces éléments de serrage 25a,25b ; 26a,26b permettant d'assurer la mise en tension des lignes inférieures de soutien 25,26.

Pour conforter le maintien de la planche 6 dans sa position suspendue, le dispositif 1 comporte un premier 30 et une second 31 élément de maintien qui sont réalisés en un matériau élastique et qui s'étendent chacun au niveau de la face supérieure 21 de la planche 6 entre les sections d'extrémités 17, 18 des éléments d'appui 13,14 correspondants.

Comme illustré sur les figures 2 et 3, les extrémités opposées des premier 30 et second 31 éléments de maintien comportent un crochet 30a,31a qui vient en prise dans les anneaux de fixation 19,20 des sections d'extrémité 17,18 des éléments d'appui 13,14.

Ces éléments de maintien 30,31 peuvent s'étendre à proximité de la face supérieure 21 de la planche 6 mais sont préférentiellement en contact avec la face supérieure 21 de la planche 6 afin de conférer une sécurité maximum de maintien de la planche 6 en suspension.

Par ailleurs, dans le cas où la planche 6 est une planche de surf et pour assurer la fixation de la planche 6 au dispositif 1, un système de fixation 32 s'étend entre les sections d'extrémités opposées 18 de l'élément d'appui 14 situé au niveau de la partie arrière de la planche 6, en passant par l'attache 33 qui fait partie intégrante de la planche de surf 6 en assurant le lien entre la planche 6 et le pied du surfeur.

Pour ce faire et comme visible sur la figure 3, les extrémités opposées du système de fixation 32 comportent un noeud de type tête d'alouette 32a fixé dans l'anneau de fixation 20 des sections d'extrémités opposées 18 de l'élément d'appui arrière 14.

En référence à la figure 1, le dispositif comporte une première 35 et une seconde 36 sangle de serrage qui s'étendent chacune transversalement entre la première 9a,10a et la seconde 9b,10b ligne secondaire de la ligne principale correspondante 2,3. Ces sangles de serrage 35,36 sont montées coulissantes relativement aux première 9a, 10a et seconde 9b,10b lignes secondaires selon la flèches F1,F2 de façon à faire varier l'intensité de l'exercice.

Plus précisément, lorsque les sangles de serrage 35,36 sont descendues proche de la planche 6, la distance entre les première 9a,10a et seconde 9b,10b lignes secondaires des lignes principales associées 2,3 devient moins importante. La planche 6 devient alors plus instable et l'exercice est alors plus difficile. Au contraire, lorsque les barres de réglages 35,36 sont remontées, la distance entre les première 9a,10a et seconde 9b,10b lignes secondaires des lignes principales associées 2,3 est plus importante. La planche 6 est donc plus stable et l'exercice est plus simple.

Toujours en référence à la figure 1, une ligne de sécurité 37 s'étend longitudinalement entre les parties supérieures simples 7,8 des lignes principales 2,3. Une ligne de barre 38 est suspendue verticalement au dessus de la planche 6 en s'étendant depuis la ligne de sécurité 37 à laquelle la dite ligne de barre 38 est montée en coulissement par l'intermédiaire d'un anneau 39, jusqu'à une barre 40 destinée à être saisie par l'utilisateur pour travailler sur le dispositif 1. La ligne de barre 38 comporte à ses extrémités deux éléments de serrage 38a,38b dont les extrémités opposées comportent un noeud dit en tête d'alouette et qui permettent, par leur serrage, de régler la longueur de la ligne de barre 38 selon la taille de l'utilisateur et l'exercice réalisé.

Ont déjà été décrits précédemment différents éléments de serrage 11a,11b,12a,12b ;25a,26a,25b,26b ;38a,38b. Il s'agit des éléments de serrage 11a,11b,12a,12b situés en partie inférieure des première 9a,10a et seconde 9b,10b lignes secondaires, des éléments de serrage 25a,26a,25b,26b situés aux extrémités des lignes inférieures de soutien 25,26 situés sous la planche 6, et des éléments de serrage 38a,38b de la ligne de barre 38.

Le dispositif de l'invention 1 comporte en outre deux éléments de serrage 7a,8a situés en partie inférieure des parties supérieures simples 7,8 des lignes des lignes principales 2,3. Ces éléments de serrage 7a,8a comportent également à leurs extrémités opposées des noeuds de type tête d'alouette permettant de réduire ou d'augmenter leur longueur en ajustant dans le même temps la longueur des lignes principales 2,3 et leur tension.

La ligne de sécurité 37 comporte également deux éléments de serrage 37a,37b situés au niveau des extrémités opposées de la dite ligne de sécurité 37 et assurant le réglage de la longueur de cette ligne de sécurité 37.

Tous ces éléments de serrage 7a,8a ;11a,11b,12a,12b,25a,25b,26a,26b, 37a,37b,38a,38b permettent, lorsqu'ils sont pris isolément, de régler la longueur et la tension de la ligne sur laquelle ils se trouvent, et lorsqu'ils sont considérés conjointement, de régler la tension du dispositif de l'invention 1.

Le dispositif 1 tel quel décrit précédemment dans son premier mode de réalisation, permet d'assurer l'entraînement en axe sur une planche en suspension.

Le dispositif illustré sur la figure 4 selon un second mode de réalisation, permet d'assurer l'entraînement en rotation sur la planche.

Le dispositif 50 selon cette seconde variante comporte un certain nombre d'éléments communs avec le dispositif 1 de la première variante. Par souci de clarté, les références communes sont reprises dans la description ci-après.

Le dispositif 50 de la seconde variante comporte une première ligne principale de soutien 2 et une seconde ligne principale de soutien 3 qui se rejoignent dans leur partie supérieure jusqu'à un point d'attache supérieur unique 51.

Outre cette différence au niveau de leur point d'attache supérieur, les première 2 et seconde 3 lignes principales sont identiques à celles décrites en référence à la figure 1, à savoir leur dédoublement pour former des première 9a,10a et des seconde 9b,10b lignes secondaires et leur fixation en partie inférieure à la planche 6. Sont également communs avec le dispositif 1 de la première variante, les barres de soutien 13,14, les lignes inférieures de soutien 25,26, les éléments de maintien élastique 30,31, l'élément de fixation 32 lorsque la planche 6 est une planche de surf et les sangles de serrage 35,36. Les fixations relatives de tous ces éléments sont également identiques à celles décrites précédemment en référence aux figures 1, 2 et 3.

Le dispositif 50 selon la seconde variante comporte une troisième ligne principale 52 qui s'étend depuis un point d'attache supérieur 53 située à distance longitudinale du point d'attache 51 des première 2 et seconde 3 lignes principales du coté avant de la planche 6, jusqu'aux première 9a et seconde 9b lignes secondaires de la première ligne principale 2.

La fixation de la troisième ligne principale 52 aux première 9a et seconde 9b lignes secondaires de la première ligne principale 2 est assurée par deux éléments de serrage 52a,52b assemblés ensembles à leur extrémité supérieure et permettant d'ajuster la longueur de la troisième ligne principale 52 en réglant ainsi le débattement de la rotation du dispositif 50 de la seconde variante .

La troisième ligne principale 52 comporte en outre un élément de serrage supplémentaire 52c disposé en série et permettant de régler la tension de cette ligne 52.

L'implantation de ces trois lignes principales 2,3,52 permet à l'utilisateur de travailler son équilibre en rotation.

Le dispositif 1,50 comporte des moyens permettant de passer de façon simple et rapide du dispositif en axe de la figure 1 au dispositif en rotation de la figure 4, et vice versa.

Pour ce faire et en référence à la figure 1, le dispositif 1 comporte une première 54 et une seconde 55 liaison amovible.

La première liaison amovible 54 est disposée en série sur la première ligne principale 2 entre l'élément de serrage 7a de cette première ligne principale 2 et la jonction 56 entre la partie supérieure simple 7 de la première ligne principale 2 et la ligne de sécurité 37.

La seconde liaison amovible 55 est disposée en série sur la ligne de sécurité 37 après l'élément de serrage 37b de cette ligne de sécurité 37 situé du coté de la seconde ligne principale 3.

Les première 54 et seconde 55 liaisons amovibles comportent à leurs extrémités opposées des moyens permettant leur décrochage et accrochage facile de la ligne considérée, par exemple un mousqueton.

En premier lieu, les première 54 et seconde 55 liaisons amovibles peuvent servir à supprimer la ligne de sécurité 37 du dispositif 1 de la première variante. Le dispositif 1 dépourvu de ligne de sécurité 37 permet de travailler les déplacements sur la planche 6 et le relâchement musculaire pour des personnes de niveau avancé. Un tel dispositif 1 permet en outre d'acquérir une meilleure perception de l'incidence du mouvement des épaules sur le mouvement de la planche 6.

Par ailleurs, les première 54 et seconde 55 liaisons amovibles permettent également de passer du dispositif en axe de la figure 1 au dispositif en rotation de la figure 4. Pour ce faire, il suffit de décrocher la première liaison amovible 54 au niveau de la flèche A représentée sur la figure 1 et la seconde liaison amovible 55 au niveau de la flèche B, ce dont il résulte le détachement d'une partie de ligne destinée à former la troisième ligne principale 52 du dispositif de la seconde variante. A cet effet, la ligne de sécurité 37 du dispositif 1 de la figure 1 comporte en outre deux éléments de serrage supplémentaires adjacents 52a,52b disposés en série sur la dite ligne de sécurité 37 à la suite de la liaison amovible 55 du coté opposé de l'élément de serrage 37b. Ces deux éléments de serrage 52a,52b sont destinés à être utilisés pour le dispositif 50 de la seconde variante comme il a été décrit précédemment en référence à la figure 4.

Une fois les deux liaisons amovibles 54,55 décrochées, le point d'attache supérieur 4 de la première ligne principale 2 du dispositif de la figure 1 est décalé longitudinalement vers l'avant de la planche 6 pour devenir le point d'attache 53 de la troisième ligne principale 52 du dispositif de la figure 4.

Les deux éléments de serrage adjacents 52a,52b de la ligne de sécurité 37 du dispositif de la figure 1 sont alors respectivement fixés sur les première 9a et seconde 9b lignes secondaires, leurs extrémités supérieures respectives étant solidarisées. Il en résulte que le premier élément de liaison amovible 54 est inactif en étant suspendu par son extrémité supérieure à l'élément de serrage 37a à l'origine situé à l'extrémité de la ligne de sécurité 37 du coté de la première ligne principale 2.

Par ailleurs, au niveau des première 2 et seconde 3 lignes principales, l'élément de serrage 7a est fixé à la seconde liaison amovible 55 et le point d'attache supérieur 5 de la seconde ligne principale 3 est centrée au dessus de la planche 6 et devient ainsi le point d'attache unique 51 des première 2 et seconde 3 lignes principales du dispositif de la seconde variante illustré sur la figure 4.

Bien évidemment, le passage du dispositif en rotation de la figure 4 au dispositif en axe de la figure 1 est réalisé par les opérations inverses de celles venant d'être décrites. Le caractère modulable du dispositif lui permet de passer de la configuration en axe (figure 1) à la configuration en rotation (figure 2) de façon facile et rapide. Par ailleurs, le dispositif s'adapte à tout type de planche de sport de glisse, notamment par la présence des différents éléments de serrage.

Selon une autre variante de réalisation non représentée et restant dans le champ de l'invention, le dispositif peut prendre la forme du dispositif 50 de la figure 4 en étant dépourvu de troisième ligne principale 52. Un tel dispositif permet d'assurer l'entraînement d'un travail d'accélération par compression et décompression des jambes. De préférence, la troisième ligne principale 52 est présente en s'étendant de façon libre depuis la fixation supérieure 53. L'utilisateur peut ainsi la saisir pour s'aider aux mouvements de rotation.

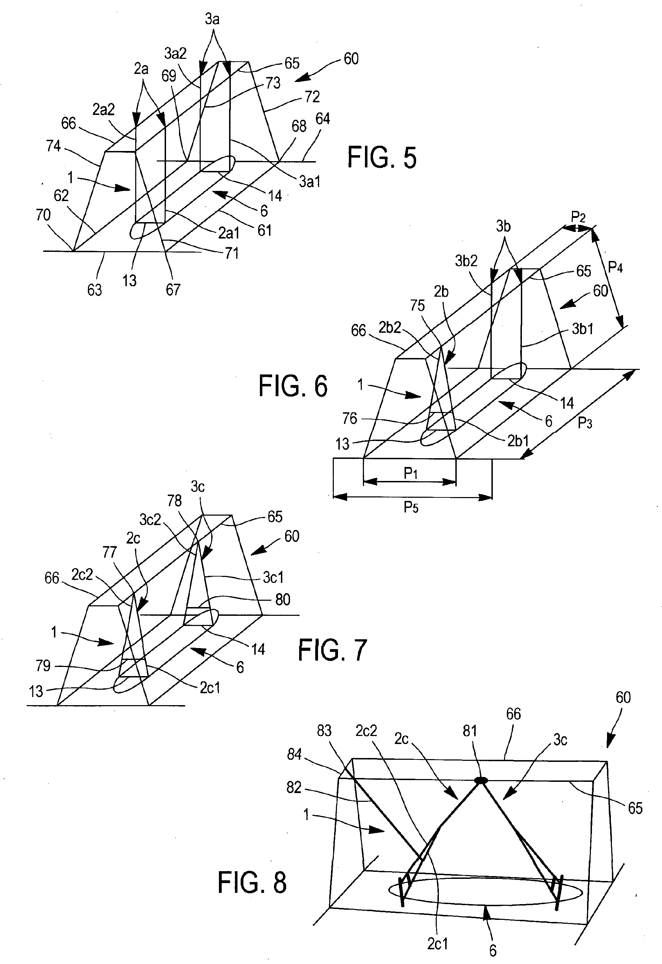

En référence aux figures 5 à 8 et selon une troisième variante de l'invention, le dispositif de l'invention 1 est suspendu à un portique 60.

En référence à la figure 5, ce portique 60 est composé principalement dans sa partie basse de deux montants parallèles inférieurs longitudinaux 61,62 et de deux montants parallèles inférieurs transversaux 63,64 qui reposent sur le sol. Dans sa partie haute, deux montants parallèles supérieurs longitudinaux 65,66 sont fixés au niveau des intersections respectives entre les montants parallèles inférieurs longitudinaux 61,62 et les montants parallèles inférieurs transversaux 63,64 au moyen de deux couples de montants obliques 71,72, 73,74. L'orientation oblique de ces derniers montants 71,72, 73,74 s'explique par le fait que la largeur P1 entre les deux montants parallèles inférieurs longitudinaux 61,62 est supérieure à la largeur P2 entre les deux montants parallèles supérieurs longitudinaux 65,66.

On donne ci-après des dimensions préférées du portique 60 en référence à la figure 6. Bien que ces dimensions ne soient pas limitatives, elles sont particulièrement adaptées à la suspension du dispositif de l'invention 1.

La largeur P1 entre les deux montants parallèles inférieurs longitudinaux 61,62 est de 160 centimètres, la largeur P2 entre les deux montants parallèles supérieurs longitudinaux 65,66 est de 40 centimètres, la longueur P3 des deux montants parallèles inférieurs longitudinaux 61,62 est de 240 centimètres, la longueur P4 de chacun des montants oblique 71,72, 73,74 est de 240 centimètres et la longueur P5 des deux montants parallèles inférieurs transversaux 63,64 est de 240 centimètres également.

Dans cette variante, les deux montants parallèles supérieurs longitudinaux 65,66 forment fixation supérieure des première 2a,2b,2c et seconde 3a,3b,3c lignes principales de soutien de la planche 6. Ces deux montants parallèles supérieurs longitudinaux 65,66 permettent à cet effet de réaliser plusieurs configuration d'attaches supérieurs possibles selon l'intensité souhaitée de l'exercice et selon le travail dans l'axe ou en rotation que l'on souhaite accentuer.

Plus précisément et en référence à la figure 5, chacune des première 2a et seconde 3a ligne principale de soutien est constituée de deux lignes parallèles secondaire 2a1,2a2 ;3a1,3a2 qui s'étendent chacune depuis les extrémités transversales respectives des premier 13 et second 14 élément de soutien.

Pour chaque couple de ligne secondaire 2a1,2a2 ;3a1,3a2, une première ligne secondaire 2a1,3a1 est fixée par son extrémité supérieure en un point d'attache à l'un des deux montants parallèles supérieurs longitudinaux 65 et la seconde ligne secondaire 2a2,3a2 est fixée par son extrémité supérieure en un point d'attache au montant parallèle supérieur longitudinal opposé 66.

Dans cette configuration, l'intensité de l'exercice est assez faible puisque la distance entre les première et seconde lignes secondaires respectives 2a1,2a2 ;3a1,3a2 est maximum sur toute la hauteur de la suspension.

En référence à la figure 6, chacune des première 2b et seconde 3b ligne principale de soutien est constituée de deux lignes secondaire 2b1,2b2 ;3b1,3b2 qui s'étendent chacune depuis les extrémités transversales respectives des premier 13 et second 14 élément de soutien.

Pour la ligne principale avant 2b, la première ligne secondaire 2b1 et la seconde ligne secondaire 3b1 sont fixées par leurs extrémités respectives supérieures en un point d'attache commun 75 à un montant supérieur longitudinal 65. Le point d'attache commun 75 pourrait indifféremment être situé sur le montant supérieur longitudinal opposé 66. Une sangle de serrage 76 s'étend transversalement entre la première 2b1 et la seconde 3b1 ligne secondaire en étant monté coulissante. Cette sangle de serrage 76 est identique à celle décrite plus haut en référence à la figure 1.

Pour la ligne principale arrière 3b, la première ligne secondaire 3b1 est fixée par son extrémité supérieure en un point d'attache à l'un des deux montants parallèles supérieurs longitudinaux 65 et la seconde ligne secondaire 3b2 est fixée par son extrémité supérieure en un point d'attache au montant supérieur longitudinal opposé 66.

Ainsi dans cette configuration, l'intensité de l'exercice peut être réglée au niveau de la partie avant de la planche 6 par le coulissement de la sangle de serrage 76 tandis que la partie arrière de la planche 6 reste stable de par la présence des première 3b1 et seconde 3b2 lignes secondaires parallèles.

En référence à la figure 7, chacune des première 2c et seconde 3c ligne principale de soutien est constituée de deux lignes parallèles secondaire 2c1,2c2 ;3c1,3c2 qui s'étendent chacune depuis les extrémités transversales respectives des premier 13 et second 14 élément de soutien.

Pour la ligne principale avant 2c, la première ligne secondaire 2c1 et la seconde ligne secondaire 3c1 sont fixées par leurs extrémités respectives supérieures en un point d'attache commun 77 à un montant supérieur longitudinal 65. Le point d'attache commun 77 pourrait indifféremment être situé sur le montant supérieur longitudinal opposé 66. Une sangle de serrage 79 s'étend transversalement entre la première 2b1 et la seconde 3b1 ligne secondaire en étant monté coulissante.

De la même façon, pour la ligne principale arrière 3c, la première ligne secondaire 3c1 et la seconde ligne secondaire 3c2 sont fixées par leurs extrémités respectives supérieures en un point d'attache commun 78 à un montant supérieur longitudinal 65. Le point d'attache commun 78 pourrait indifféremment être situé sur le montant supérieur longitudinal opposé 66. Une sangle de serrage 80 s'étend transversalement entre la première 2b1 et la seconde 3b1 ligne secondaire en étant monté coulissante.

Dans cette configuration, l'intensité de l'exercice peut être réglée à la fois au niveau de la partie avant de la planche 6 et au niveau de sa partie arrière.

Il est à noter pour les configurations décrites en référence aux figures 5 à 6 qu'une sangle de serrage peut également être ménagée entre les lignes secondaires 2a1,2a2 ;3a1,3a2 ;3b1,3b2 qui sont fixées au portique 60 par un point d'attache spécifique à chaque ligne secondaire considérée. Dans ce cas, la sangle de serrage sera de largeur inférieure à la largeur entre deux lignes secondaires considérées 2a1,2a2 ;3a1,3a2 ;3b1,3b2 pour faire varier l'écartement entre ces deux lignes secondaires 2a1,2a2 ;3a1,3a2 ;3b1,3b2, et ainsi modifier l'intensité de l'exercice au niveau de cette partie de la planche.

La figure 8 représente l'adaptation de la configuration de la seconde variante de la figure 3 à l'installation du dispositif sur le portique 60. Les références relatives à la figure 7 sont reprises puisque la configuration de la figure 8 peut être obtenue à partir de la configuration de la figure 7.

Les deux points d'attache 77,78 de la configuration de la figure 7 sont réunis en un point d'attache unique 81 sur l'un des deux montants supérieurs longitudinaux 65. La troisième ligne principale 82 est montée sur le dispositif en s'étendant depuis les première 2c1 et seconde 2c2 lignes secondaires de la ligne principale avant 2c, jusqu'à un point d'attache 82 situé au niveau d'un montant supérieur transversal 84 reliant les deux montants supérieurs longitudinaux 65,66. Cette troisième ligne principale 32 à identique à la troisième ligne principale 52 décrite en référence à la figure 4.

Cette configuration permet, comme celle de la figure 4, d'assurer l'entraînement en rotation de la planche 6.

Le portique 60 permet ainsi de pouvoir moduler facilement l'intensité et le type d'exerce d'entraînement par la modification de l'agencement des fixations supérieures des lignes principales de soutien de la planche. Bien que non repris dans la description des figures 5 à 8, tous les éléments autres que les moyens de suspension de la planche 6 au portique 60 sont présents dans la troisième variante des figures 5 à 8, ces éléments comprenant notamment les éléments de maintien 13,14, leur assemblage sur la planche 6 et leurs composants, les différents éléments de serrage, les lignes inférieures de soutien et les liaisons amovibles.

Quelque soit la variante considérée, le ou les points d'attache des première 2,2a,2b,2c et seconde 3,3a,3b,3c ligne principale des soutien de la planche 6 sont situés au-dessus et à distance de la dite planche 6. Cette disposition particulière du ou des points d'attache permet de s'approcher de plus précisément des conditions d'utilisation d'une planche, notamment de surf, sur l'eau. Par ailleurs, cette disposition du ou des points d'attache permet également de pouvoir agencer les lignes secondaires des première et seconde ligne principale, de pouvoir choisir un ou deux points d'attache par ligne principale selon l'intensité souhaitée de l'exercice, de pouvoir agencer un point d'attache unique avec la troisième ligne principale pour un travail en rotation, et de pouvoir agencer les sangles de serrage entre deux lignes secondaires pour faire également varier l'intensité de l'exercice.

Le dispositif de l'invention dans toutes ses variantes permet ainsi de servir de support de préparation physique et gestuelle à un sport de glisse. Ce dispositif peut également servir d'élément de musculation, d'équilibre et d'étirement, ou encore de support de relaxation.

## Revendications

1. Dispositif d'entraînement pour un sport de glisse comportant une planche, et au moins une première (2,2a,2b,2c) et une seconde (3,3a,3b,3c) lignes principales de soutien de la planche (6) s'étendant depuis au moins un point d'attache supérieur (4,5 ;51 ; 75,77,81,83) situé au-dessus et à distance de la planche (6) jusqu'à respectivement un premier (13) et un second (14) éléments de soutien de la planche (6) s'étendant chacun transversalement sous la planche (6) et comportant chacun une partie d'appui (15,16) sur laquelle repose la face inférieure de la dite planche (6) et chacune des première (2,2a,2b,2c) et seconde (3, 3a,3b,3c) lignes principales comporte une première (9a,9b,2a1,3a1,2b1,3b1,2c1,3c1) et une seconde (10a,10b, 2a2,3a2,2b2,3b2,2c2,3c2) lignes secondaires, les extrémités inférieures des deux lignes secondaire (9a,9b,2a1,3a1,2b1,3b1,2c1,3c1) de la première ligne principale (2, 2a,2b,2c) étant solidarisées aux extrémités transversales (17) du premier élément de soutien (13), et les extrémités inférieures des deux lignes secondaires (10a,10b,2a2,3a2,2b2,3b2,2c2,3c2) de la seconde ligne principale (3, 3a,3b,3c) étant solidarisées aux extrémités transversales (18) du second élément de soutien (14), et les premier (13) et second (14) éléments de soutien sont respectivement disposés au niveau de la partie avant et de la partie arrière de la planche (6), et chacune des première (2, 2a,2b,2c) et seconde (3, 3a,3b,3c) ligne principale s'étend au niveau de son extrémité supérieure depuis respectivement deux points d'attaches distincts coïncidant chacun avec l'extrémité supérieure de la première (2a) ou seconde (3a,3b) ligne secondaire à considérer

2. Dispositif selon la revendication 2, **caractérisé en ce qu'**une première (25) et une seconde (26) lignes inférieures de soutien s'étendent chacune longitudinalement sous la planche (6) depuis l'extrémité transversale (17) d'un élément de soutien (13) jusqu'à l'extrémité transversale (18) située du même coté de la planche (6) de l'élément de soutien opposé (14).

3. Dispositif selon l'une quelconque des revendications précédentes, **caractérisé en ce qu'**il comporte un premier (30) et un second (31) élément de maintien de la planche (6) réalisé en un matériau élastique et s'étendant transversalement à proximité de la face supérieure (21) de la dite planche (6) entre les extrémités transversales (17,18) respectivement des premier (13) et second (14) éléments de soutien.

4. Dispositif selon l'une quelconque des revendications 2 à 3, **caractérisé en ce qu'**une sangle de serrage (35,36) s'étend transversalement entre la première (9a,9b,2b1,2c1,3c1) et la seconde (10,10b,2b2,2c2,3c2) ligne secondaire d'une ligne principale concernée (2, 2b,2c,3c) en étant montée en coulissement sur ces dites lignes secondaires (9a,9b, 2b1,2c1,3c1 ;10a,10b, 2b2,2c2,3c2).

5. Dispositif selon l'une quelconque des revendications précédentes, **caractérisé en ce qu'**il comporte un portique (60) comprenant au moins deux montants supérieurs parallèles longitudinaux (65,66) reliés à des montants inférieurs (61,62,63,64) en appui sur le sol, desquels montants supérieurs parallèles longitudinaux (65,66) s'étendent les première (2, 2a,2b,2c) et seconde (3, 3a,3b,3c) lignes principales jusqu'au premier (13) et un second (14) éléments de soutien situés à distance du sol.

6. Dispositif selon la revendication 5, **caractérisée en ce que** les points d'attache des première (2, 2a,2b,2c) et seconde (3, 3a,3b,3c) lignes principales sont situés sur l'un (65,66) ou l'autre (66,65) des montants supérieurs parallèles longitudinaux (65,66).

7. Dispositif selon l'une quelconque des revendications précédentes, **caractérisé en ce qu'**il comporte une première attache amovible (54) montée en série sur une ligne principale (2) et une seconde attache amovible (55) montée à proximité de la ligne principale opposée (3) en série sur une ligne de sécurité (37) qui s'étend entre les deux lignes principale (2,3) en supportant une ligne de barre (38) montée en coulissement sur la ligne de sécurité (37) et comportant à son extrémité inférieure une barre (40) en regard de la planche (6) destinée à être saisie par l'utilisateur du dispositif (1), les première (54) et seconde (55) liaisons amovibles permettant, par leur décrochage respectif, de monter une troisième ligne principale (52) apte à s'étendre depuis un point d'attache supérieur (53) jusqu'aux première (9a) et seconde (9b) lignes secondaires d'une ligne principale (2) dont l'extrémité supérieure restante est solidarisée à l'une des liaisons amovibles restante (54,55).

8. Dispositif selon l'une quelconque des revendications précédentes, **caractérisé en ce que** la planche (6) est une planche de surf.

9. Utilisation du dispositif selon l'une quelconque des revendications précédentes comportant la préparation physique et gestuelle d'un sport de glisse.

## Patentansprüche

1. Trainingsvorrichtung für einen Gleitsport, umfassend ein Brett und mindestens eine erste (2, 2a, 2b, 2c) und eine zweite (3, 3a, 3b, 3c) Hauptstützleine des Bretts (6), die sich von mindestens einem oberen Befestigungspunkt (4, 5; 51; 75, 77, 81, 83), der sich über und in einem Abstand zum Brett (6) befindet, bis zu einem ersten (13) bzw. zweiten (14) Stützelement des Bretts (6), die sich jeweils quer unter dem Brett (6) erstrecken und jeweils einen Stützteil (15, 16) umfassen, auf dem die Unterseite des Bretts (6) aufliegt, erstrecken, und wobei jede der ersten (2, 2a, 2b, 2c) und zweiten (3, 3a, 3b, 3c) Hauptleinen eine erste (9a, 9b, 2a1, 3a1, 2b1, 3b1, 2c1, 3c1) und eine zweite (10a, 10b, 2a2, 3a2, 2b2, 3b2, 2c2, 3c2) Hilfsleine umfasst, wobei die unteren Enden der zwei Hilfsleinen (9a, 9b, 2a1, 3a1, 2b1, 3b1, 2c1, 3c1) der ersten Hauptleine (2, 2a, 2b, 2c) mit den Querenden (17) des ersten Stützelements (13) verbunden sind, und die unteren Enden der zwei Hilfsleinen (10a, 10b, 2a2, 3a2, 2b2, 3b2, 2c2, 3c2) der zweiten Hauptleine (3, 3a, 3b, 3c) mit den Querenden (18) des zweiten Stützelements (14) verbunden sind, und wobei das erste (13) und zweite (14) Stützelement im Bereich des vorderen Teils bzw. hinteren Teils des Bretts (6) angeordnet sind, und wobei sich jede der ersten (2, 2a, 2b, 2c) und zweiten (3, 3a, 3b, 3c) Hauptleinen im Bereich ihres oberen Endes von jeweils zwei getrennten Befestigungspunkten aus erstrecken, die jeweils mit dem oberen Ende der ersten (2a) oder zweiten (3a, 3b) zu berücksichtigenden Hilfsleine zusammenfallen.

2. Vorrichtung nach Anspruch 2, **dadurch gekennzeichnet, dass** sich eine erste (25) und eine zweite (26) untere Stützleine jeweils längs unter dem Brett (6) vom Querende (17) eines Stützelements (13) bis zum Querende (18), das sich auf derselben Seite des Bretts (6) des gegenüberliegenden Stützelements (14) befindet, erstrecken.

3. Vorrichtung nach einem der vorhergehenden Ansprüche, **dadurch gekennzeichnet, dass** sie ein erstes (30) und ein zweites (31) Halteelement des Bretts (6) umfasst, die aus einem elastischen Material hergestellt sind und sich quer in der Nähe der Oberseite (21) des Bretts (6) zwischen den Querenden (17, 18) des ersten (13) bzw. zweiten (14) Stützelements erstrecken.

4. Vorrichtung nach einem der Ansprüche 2 bis 3, **dadurch gekennzeichnet, dass** sich ein Spanngurt (35, 36) quer zwischen der ersten (9a, 9b, 2b1, 2c1, 3c1) und der zweiten (10, 10b, 2b2, 2c2, 3c2) Hilfsleine einer betreffenden Hauptleine (2, 2b, 2c, 3c) erstreckt, indem obei er gleitend auf diesen Hilfsleinen (9a, 9b, 2b1, 2c1, 3c1; 10a, 10b, 2b2, 2c2, 3c2) montiert ist.

5. Vorrichtung nach einem der vorhergehenden Ansprüche, **dadurch gekennzeichnet, dass** sie einen Rahmen (60) umfasst, umfassend mindestens zwei obere parallele Längsstreben (65, 66), die mit unteren, am Boden abgestützten Streben (61, 62, 63, 64) verbunden sind, wobei sich von den oberen parallelen Längsstreben (65, 66) aus die erste (2, 2a, 2b, 2c) und die zweite (3, 3a, 3b, 3c) Hauptleine bis zum ersten (13) und zweiten (14) Stützelement, die sich in einem Abstand zum Boden befinden, erstrecken.

6. Vorrichtung nach Anspruch 5, **dadurch gekennzeichnet, dass** die Befestigungspunkte der ersten (2, 2a, 2b, 2c) und zweiten (3, 3a, 3b, 3c) Hauptleine auf der einen (65, 66) oder der anderen (66, 65) der oberen parallelen Längsstreben (65, 66) angeordnet sind.

7. Vorrichtung nach einem der vorhergehenden Ansprüche, **dadurch gekennzeichnet, dass** sie eine erste lösbare Befestigung (54), die in Serie auf einer Hauptleine (2) montiert ist, und eine zweite lösbare Befestigung (55), die in der Nähe der gegenüberliegenden Hauptleine (3) in Serie auf einer Sicherheitsleine (37) montiert ist, die sich zwischen den zwei Hauptleinen (2, 3) erstreckt, wobei sie eine Stangenleine (38) trägt, die gleitend auf der Sicherheitsleine (37) montiert ist, und umfassend an ihrem unteren Ende eine Stange (40) gegenüber dem Brett (6), die dazu bestimmt ist, vom Benutzer der Vorrichtung (1) erfasst zu werden, wobei es die erste (54) und zweite (55) lösbare Verbindung durch ihre jeweilige Abnahme ermöglichen, eine dritte Hauptleine (52) zu montieren, die geeignet ist, sich von einem oberen Befestigungspunkt (53) bis zu der ersten (9a) und zweiten (9b) Hilfsleine einer Hauptleine (2) zu erstrecken, deren restliches oberes Ende mit einer der restlichen lösbaren Verbindungen (54, 55) verbunden ist.

8. Vorrichtung nach einem der vorhergehenden Ansprüche, **dadurch gekennzeichnet, dass** das Brett (6) ein Surfbrett ist.

9. Verwendung der Vorrichtung nach einem der vorhergehenden Ansprüche, umfassend die physische und gestische Vorbereitung eines Gleitsports.

## Claims

1. Training device for a boardsport, having a board and at least a first (2, 2a, 2b, 2c) and second (3, 3a, 3b, 3c) main support line of the board (6) extending from at least one upper attachment point (4, 5; 51; 75, 77, 81, 83), situated above and at a distance from the board (6), to respectively a first (13) and second (14) support element of the board (6), each extending transversely under the board (6) and each having a bearing part (15, 16) on which the lower face of said board (6) rests, and each of the first (2, 2a, 2b, 2c) and second (3, 3a, 3b, 3c) main lines has a first (9a, 9b, 2a1, 3a1, 2b1, 3b1, 2c1, 3c1) secondary line and a second (10a, 10b, 2a2, 3a2, 2b2, 3b2, 2c2, 3c2) secondary line, the lower ends of the two secondary lines (9a, 9b, 2a1, 3a1, 2b1, 3b1, 2c1, 3c1) of the first main line (2, 2a, 2b, 2c) being rigidly connected to the transverse ends (17) of the first support element (13), and the lower ends of the two secondary lines (10a, 10b, 2a2, 3a2, 2b2, 3b2, 2c2, 3c2) of the second main line (3, 3a, 3b, 3c) being rigidly connected to the transverse ends (18) of the second support element (14), and the first (13) and second (14) support elements are located respectively at the front part and the rear part of the board (6), and each of the first (2, 2a, 2b, 2c) and second (3, 3a, 3b, 3c) main lines extends, at its upper end, from respectively two distinct attachment points each coinciding with the upper end of the first (2a) or second (3a, 3b) secondary line in question.

2. Device according to Claim 2, **characterized in that** a first (25) and a second (26) lower support line each extend longitudinally under the board (6) from the transverse end (17) of one support element (13) to the transverse end (18), located on the same side of the board (6), of the opposite support element (14) .

3. Device according to either of the preceding claims, **characterized in that** it has a first (30) and a second (31) holder element of the board (6), made of an elastic material and extending transversely near the upper face (21) of said board (6) between the transverse ends (17, 18), respectively, of the first (13) and second (14) support elements.

4. Device according to either of Claims 2 to 3, **characterized in that** a tightening strap (35, 36) extends transversely between the first (9a, 9b, 2b1, 2c1, 3c1) and second (10, 10b, 2b2, 2c2, 3c2) secondary lines of a main line (2, 2b, 2c, 3c), the tightening strap being mounted slidably on said secondary lines (9a, 9b, 2b1, 2c1, 3c1; 10a, 10b, 2b2, 2c2, 3c2).

5. Device according to any one of the preceding claims, **characterized in that** it has a frame (60) comprising at least two upper parallel longitudinal members (65, 66) connected to lower members (61, 62, 63, 64) bearing on the ground, and the first (2, 2a, 2b, 2c) and second (3, 3a, 3b, 3c) main lines extend from the upper parallel longitudinal members (65, 66) to the first (13) and second (14) support elements situated at a distance from the ground.

6. Device according to Claim 5, **characterized in that** the attachment points of the first (2, 2a, 2b, 2c) and second (3, 3a, 3b, 3c) main lines are situated on one (65, 66) or the other (66, 65) of the upper parallel longitudinal members (65, 66).

7. Device according to any one of the preceding claims, **characterized in that** it has a first removable attachment (54) mounted in series on a main line (2), and a second removable attachment (55) mounted close to the opposite main line (3) in series on a safety line (37) which extends between the two main lines (2, 3) while supporting a bar line (38) mounted slidably on the safety line (37) and having, at its lower end, a bar (40) located opposite the board (6) and adapted to be gripped by the user of the device (1), the first (54) and second (55) removable attachments making it possible, when they are released, to mount a third main line (52) which can extend from an upper attachment point (53) to the first (9a) and second (9b) secondary lines of a main line (2), of which the remaining upper end is rigidly connected to the remaining one of the removable attachments (54, 55).

8. Device according to any one of the preceding claims, **characterized in that** the board (6) is a surf board.

9. Use of the device according to any one of the preceding claims, including preparing physically for the body movements required in a boardsport.
